# EUROPEAN PATENT APPLICATION

(11) **EP 3 839 748 A1**
(43) Date of publication of application: **23.06.2021**
(21) Application number: 20763518.6
(22) Date of filing: 14.02.2020
(51) Int. Cl.: G06F 12/0808, G06F 12/0815, G06F 16/172

(54) **MEMORY DISPOSITION DEVICE, MEMORY DISPOSITION METHOD, AND RECORDING MEDIUM STORING MEMORY DISPOSITION PROGRAM**

(30) Priority: 26.02.2019 JP 2019033000
(71) Applicant: NEC Corporation, 108-8001 Tokyo (JP)
(72) Inventor: KAWAHARA Aoi, Tokyo 108-8001 (JP)
(74) Representative: Vossius & Partner Patentanwälte Rechtsanwälte mbB
(86) International application number: PCT/JP2020/005714
(87) International publication number: WO 2020/175173

(57) **Abstract**

A memory disposition device of a computer system is provided that suppresses deterioration of memory access performance of a process. A memory disposition device of a computer system in which a plurality of nodes exists, each of the nodes including a pair of a processor and a memory, the memory disposition device including a memory position determination unit for determining a node in which a memory area to be mapped is disposed, and a mapping unit for duplicating the memory area and disposing the memory area, based on a determination result, in a local memory of a node in which a process operates, in which the mapping means invalidates maintenance of cache coherency between the nodes and invalidates access to a remote memory for the process.

## Description

### [Technical Field]

The present disclosure relates to a technology for memory disposition in a computer system using a non-uniform memory access (NUMA) architecture.

### [Background Art]

One architecture of a shared memory multiprocessor system equipped with multiple processors and memories is NUMA (Non-Uniform Memory Access). NUMA includes multiple processor and memory pairs (called nodes) connected by an interconnect.

Under NUMA, in order to allow the processor to use the memories of other nodes besides its own node, the memory of each node is mapped to a physical address space common to all processors. As viewed from the processor, the memory of the own node is called a local memory, and the memory of another node is called a remote memory.

In the NUMA architecture, memory access between the local memory and the remote memory for a process must be via an interconnect. In the interconnect, management data for maintaining cache coherency also flows in addition to a memory transfer request from the process. During one memory transfer (including data for cache coherency), another request cannot be transferred at the same time. Thus, the total amount of data flowing through the interconnect is one of the causes of lowering execution efficiency of a process that performs memory transfer often. Access performance to the remote memory is slower than to the local memory, and thus execution performance becomes higher when frequently accessed data is disposed in the local memory.

### [Citation List]

### [Patent Literature]

[PTL 1] JP 2001-515244 A

### [Summary of Invention]

### [Technical Problem]

In a typical operating system (OS), in a case where processes of the same program are executed in each of NUMA nodes, when multiple processes use a text area of a shared library or a read-only data area, the contents of the area do not change from process to process, and thus the area can be shared among the processes. Sharing among processes can reduce the amount of memory usage, but when the area is disposed in the remote memory, access performance is lower than the local memory.

Remote access to the remote memory increases traffic of the interconnect between nodes, which is a factor that affects execution performance of the computer system. A cache coherence protocol may also be a factor for the increase in traffic of the interconnect. A general central processing unit (CPU) maintains coherency among all cache layers between cores. Thus, a cache coherence protocol known as bus snooping or the like is used to detect a memory change. In the bus snooping, memory update information on the bus to which each CPU core is connected is detected, and the cache is invalidated as necessary. It is known that this method has disadvantages such as not increasing performance and having no scalability unless the bus bandwidth is large.

When the text area on the remote memory is shared in execution of a process, a core of the CPU needs to access the remote memory that is far away to perform an instruction fetch, and also processing for maintaining cache coherency is simultaneously performed. Such delays in memory access due to instruction fetches and interconnect congestion are considered to have an impact on execution performance in no small measure.

Thus, when the shared memory is disposed in the remote memory for a process, the performance deteriorates.

An object of the present disclosure is to provide a technology for suppressing deterioration in memory access performance of a process in order to solve the above problems.

### [Solution to Problem]

A memory disposition device that is one mode of the present disclosure is a memory disposition device of a computer system in which a plurality of nodes exists, each of the nodes including a pair of a processor and a memory, the memory disposition device including a memory position determination unit for determining a node in which a memory area to be mapped is disposed, and a mapping unit for duplicating the memory area and disposing the memory area, based on a determination result, in a local memory of a node in which a process operates, in which the mapping unit invalidates maintenance of cache coherency between the nodes and invalidates access to a remote memory for the process.

A memory disposition method that is one mode of the present disclosure is a memory disposition method of a computer system in which a plurality of nodes exists, each of the nodes including a pair of a processor and a memory, the memory disposition method including determining a node in which a memory area to be mapped is disposed, duplicating the memory area and disposing the memory area, based on a determination result, in a local memory of a node in which a process operates, and invalidating maintenance of cache coherency between the nodes and invalidating access to a remote memory for the process.

A program stored in a recording medium that is one mode of the present disclosure is a memory disposition program of a computer system in which a plurality of nodes exists, each of the nodes including a pair of a processor and a memory, the memory disposition program causing the processor to execute a process including determining a node in which a memory area to be mapped is disposed, duplicating the memory area and disposing the memory area, based on a determination result, in a local memory of a node in which a process operates, and invalidating maintenance of cache coherency between the nodes and invalidating access to a remote memory for the process.

### [Advantageous Effects of Invention]

With a memory disposition device of the present disclosure, deterioration in memory access performance of a process can be suppressed.

### [Brief Description of Drawings]

Fig. 1 is a hardware configuration diagram illustrating an example of a computer system using a NUMA architecture.
Fig. 2 is a block diagram illustrating a function of a kernel, which is one mode of a first example embodiment.
Fig. 3 is a diagram illustrating how processes of a same program use texts on local memories.
Fig. 4 is a diagram representing a state of mapping management data and memory disposition in the kernel when the processes load texts.
Fig. 5 is a flowchart illustrating operation of operating system (OS) processing upon starting the program.
Fig. 6 is a flowchart illustrating operation of file mapping by the program in the first example embodiment.
Fig. 7 is a flowchart illustrating operation of file mapping by an OS in the first example embodiment.
Fig. 8 is a block diagram illustrating a function of a memory disposition device according to a second example embodiment.

### [Example Embodiment]

### (First example embodiment)

A memory disposition device as one mode of a first example embodiment will be described together with a computer system that is a target of the memory disposition.

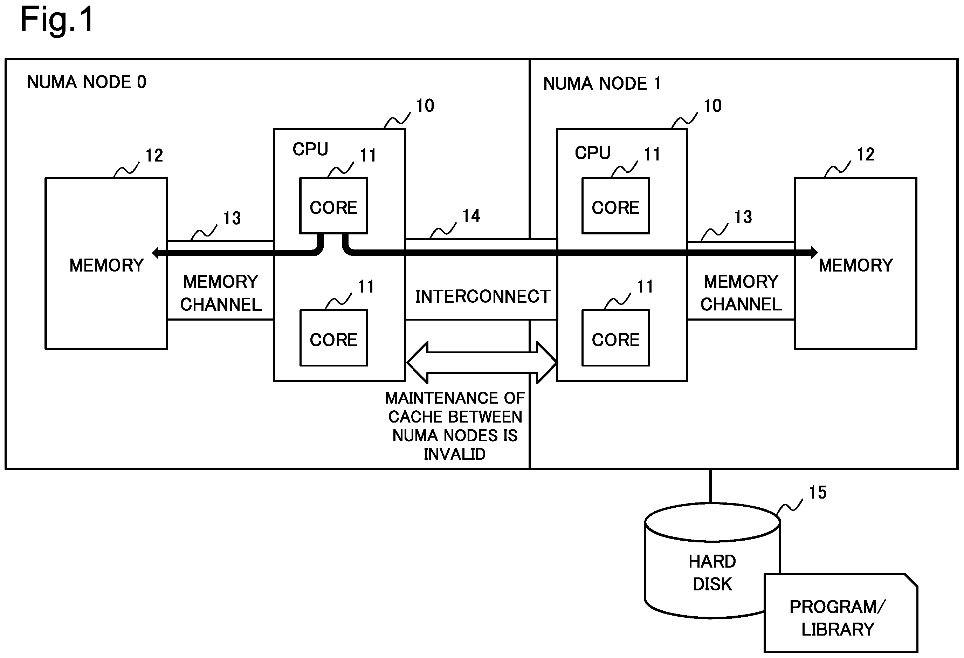

Fig. 1 is a block diagram illustrating an example of a hardware configuration of a computer system using a NUMA architecture. The computer system is provided with a NUMA node 0 that is a node in which a CPU 10 including a plurality of cores 11 and a memory 12 are connected by a memory channel 13, and a NUMA node 1 having a similar node configuration to that of the NUMA node 0. The CPU 10 of the NUMA node 0 is connected to the CPU 10 of the NUMA node 1 by an interconnect 14. The memory 12 is, for example, a random access memory (RAM). The CPU is also called a processor. The NUMA node 0 and the NUMA node 1 are communicably connected to a hard disk 15 storing a program or the like.

The hardware configuration of the computer system of Fig. 1 mainly illustrates a part related to the NUMA architecture, but is not limited to this. For example, the hardware configuration of Fig. 1 may include a read only memory (ROM), a communication interface enabling communication with an external device, and a hard disk.

The memory disposition device, which is one mode of the first example embodiment, is achieved by, for example, a program like an OS kernel executed using the CPU 10 and the memory 12 of Fig. 1. The program may be stored in a computer-readable storage medium. Although the kernel implements various functions, functions related to memory disposition or cache control in the kernel will be mainly described below.

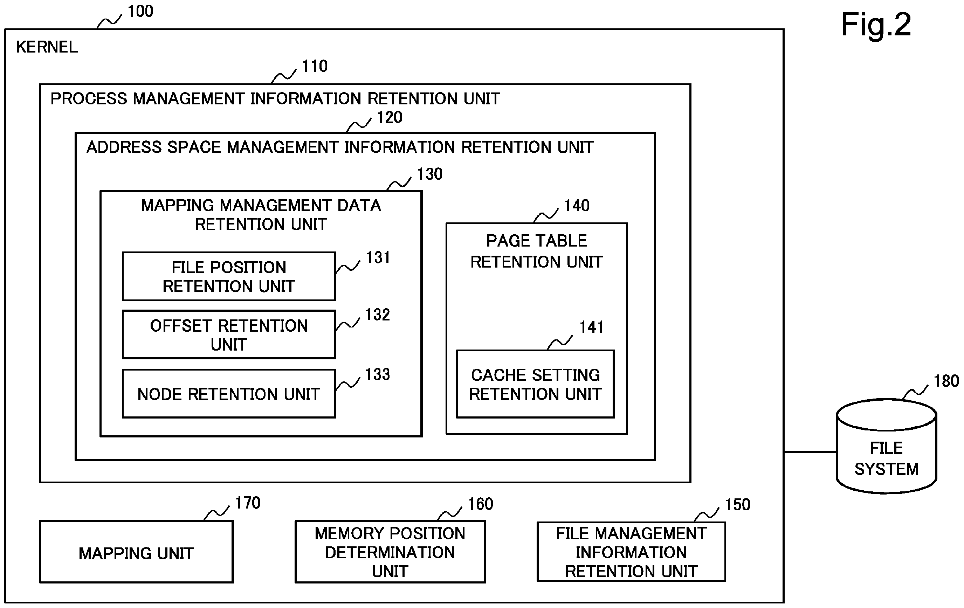

Fig. 2 is a block diagram illustrating a function of the kernel, which is one mode of the first example embodiment. It is assumed that the kernel 100 is capable of reading information or the like in a device, a process, and the kernel of the computer system as a file from the file system 180.

The kernel 100 includes a process management information retention unit 110, a file management information retention unit 150, a memory position determination unit 160, and a mapping unit 170. The process management information retention unit 110 retains address space management information and page table information as information necessary for execution of a process. In addition to memory management, the process management information retention unit 110 retains management information such as signals, file systems, and process identifiers (PIDs). The process management information retention unit 110 includes an address space management information retention unit 120 that retains address management information. The address space management information retention unit 120 includes a mapping management data retention unit 130 and a page table retention unit 140.

The mapping management data retention unit 130 includes a file position retention unit 131, an offset retention unit 132, and a node retention unit 133. The kernel 100 identifies a file on the file system 180 by a set of the file position retention unit 131 and the offset retention unit 132. The node retention unit 133 retains the number of the NUMA node in which an area of a file identified by the set of the file position retention unit 131 and the offset retention unit 132 is mapped.

The page table retention unit 140 stores a page table referred to when the CPU accesses a memory. The page table is an aggregate of management information created for each page of the memory. The page table retention unit 140 includes a cache setting retention unit 141, and the cache setting retention unit 141 is included in management information created for each page. The cache setting is information indicating whether the cache is validated or invalidated when the CPU 10 accesses the memory page.

The file management information retention unit 150 retains management information necessary for using a file stored in the file system 180, such as an inode number and a path name, for example. The memory position determination unit 160 determines a NUMA node in which a memory area to be mapped is disposed. The determination by the memory position determination unit 160 will be described later. The mapping unit 170 duplicates the memory area and disposes the memory area, based on a result of determination by the memory position determination unit 160, in the local memory of the NUMA node in which the process operates. For example, according to the result of the determination, the mapping unit 170 maps the memory area if it has not been mapped, shares the memory if the memory is in the same node as the process requesting mapping, or duplicates and maps the memory area to the node in which the process is operating if it is mapped to a node different from the process requesting mapping.

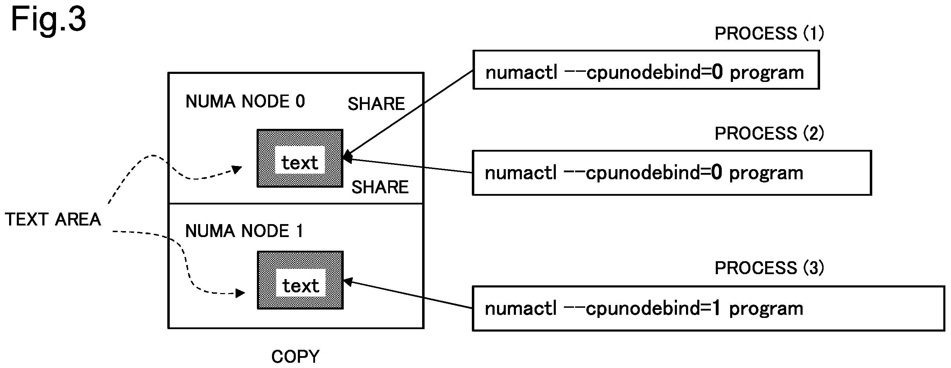

Fig. 3 is a diagram illustrating how processes of the same program use texts on local memories.

Fig. 3 is a diagram illustrating how processes of the same program use texts of the memories in NUMA nodes 0, 1 in the NUMA architecture. "numactl --cpunodebind=0" is a command specifying the NUMA node 0 as a CPU used by processes (1) and (2) of the same program. "numactl -- cpunodebind=1" is a command specifying the NUMA node 1 as a CPU used by process (3). The text of the NUMA node 1 is duplicated from the memory of the NUMA node 0 to the memory of the NUMA node 1.

The memory disposition in the NUMA architecture described in the present example embodiment can be applied when the program is started to share a text area, when a shared library is loaded to share a text area, or when read-only data is privately mapped to share a physical memory.

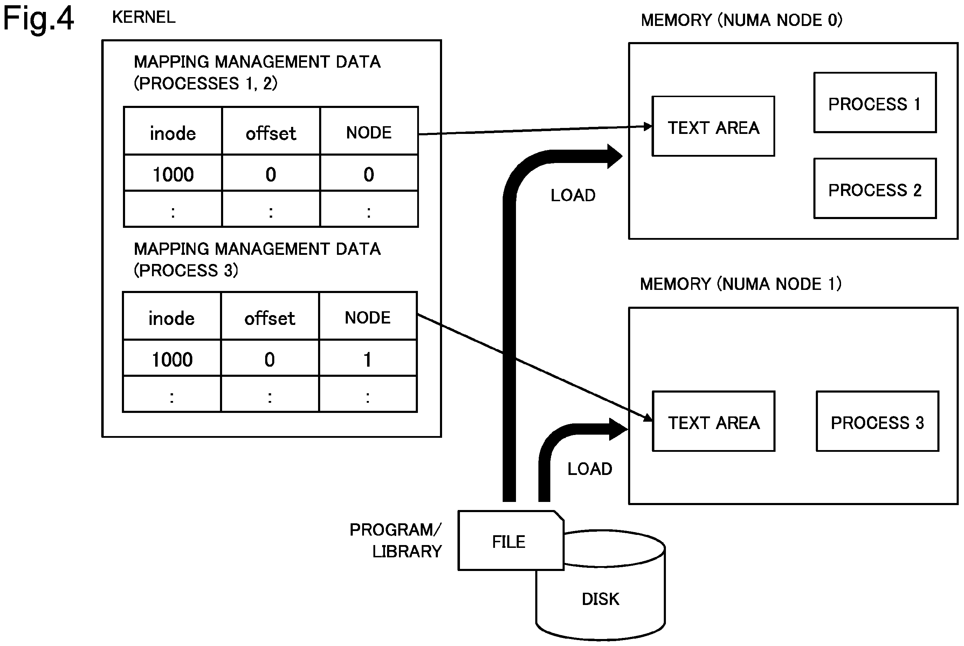

Fig. 4 is a diagram representing a state of mapping management data and memory disposition in the kernel when the processes load texts.

The kernel determines in which memory a load target of the process is present or not based on whether there is data that matches information (for example, inode) or a path name indicating the position of a file on the file system matches an offset in the file.

### <When load target is not present on memory>

When the load target is not present on the memory and an area thereof is newly disposed on the memory, the kernel creates mapping management data as information for managing which area of which file is loaded into the memory.

When the mapping management data is created, which node the area is loaded into the memory (node) is also recorded.

### <Load target is already present on memory>

When the load target is already present on a memory, which node (for example, NUMA node) the memory belongs to is checked.

When the memory belongs to the same node (NUMA node 0) as the started process, this memory is shared.

On the other hand, when the memory belongs to a node (for example, NUMA node 1) different from the started process, the load target is newly disposed in the memory of the same node (for example, NUMA node 0) as the started process, and the mapping management data is created. At this time, which node (NUMA node) the area is loaded into the memory is recorded in the mapping management data.

The process is configured by the kernel to use an area that is present on the local memory, and thus there is no need for being additionally processed by the user process.

When there is no more process to be shared in the same node (for example, NUMA node 0), the memory related to the process is released. Even when there is a process operating in the other node (for example, NUMA node 1), since a copy of target data is disposed on the memory of the other node (NUMA node 1), there is no influence of the release of memory in the node (NUMA node 0) where there is no more shared process.

Further, maintenance of cache coherency between nodes may be invalidated, and the cache for accessing the remote memory may constantly be invalidated. Thus, data of cache coherence protocol can be prevented from flowing through the interconnect. Traffic of the memory bus is thereby reduced, making it possible to use the memory for memory transfer that is originally desired to be performed by the process.

Next, an example in which the memory disposition according to the first example embodiment is applied to OS processing when the program is started will be described. Specifically, it is an application example of a case where the program is started to share a text area.

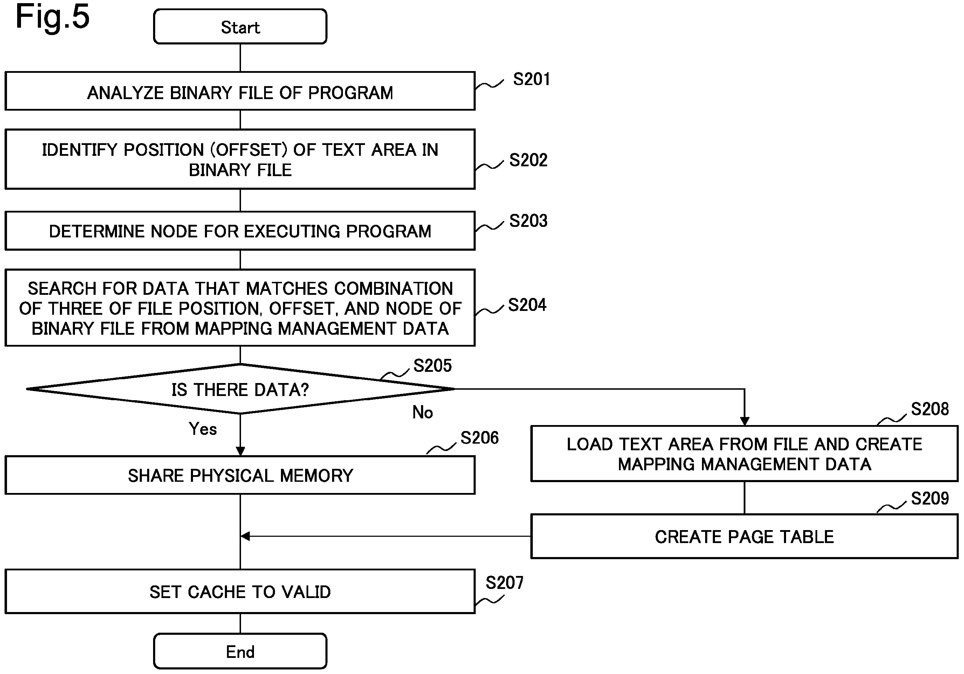

Fig. 5 is a flowchart illustrating operation of the OS processing upon starting the program. First, for the program to be executed on the OS, a loader (not illustrated), which is a part of the OS, notifies the OS of a request for starting the program. The OS creates a process image on the memory and makes necessary preparations for execution of the program. Since the processing division between the loader and the OS depends on the implementation, in the following description, the main body of the processing will be assumed as the OS without distinguishing between the loader and the OS, and will be described together with functional blocks thereof.

The loader (not illustrated) of the OS analyzes a binary file of a program (step S201). The binary file includes a text area for retaining program code or a data area for retaining an initial value of data, and the like. The loader identifies a position (offset) where the text area is stored in the binary file (step S202) and determines the node for executing the program (step S203).

The memory position determination unit 160 of the OS checks whether the text area is already mapped to the memory of a node for executing the program. Specifically, the memory position determination unit 160 searches for data that matches a combination of three of a file position, an offset, and a node of the binary file from the mapping management data (step S204).

When there is data that matches the combination of three (Yes in step S205), this means that the data has been mapped to the memory of the node executing the program, that is, the local memory of the node in which the process operates. The mapping unit 170 of the OS creates a page table so as to share the physical memory (step S206), and sets the cache to valid (step S207).

When there is no data that matches the combination of three (No in step S205), this means that no data has been mapped to the local memory. The mapping unit 170 loads the text area from the binary file into the local memory, and creates mapping management data for managing the load status (step S208). Thereafter, the mapping unit 170 creates a page table of the loaded memory (step S209) and sets the cache to valid (step S207).

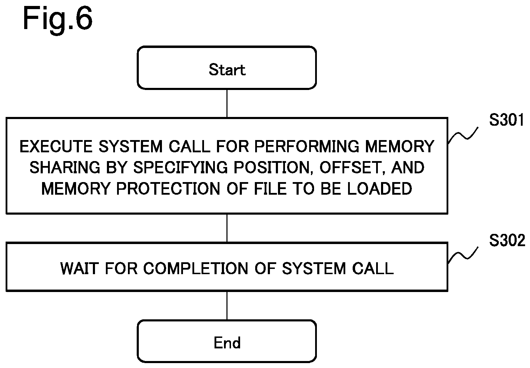

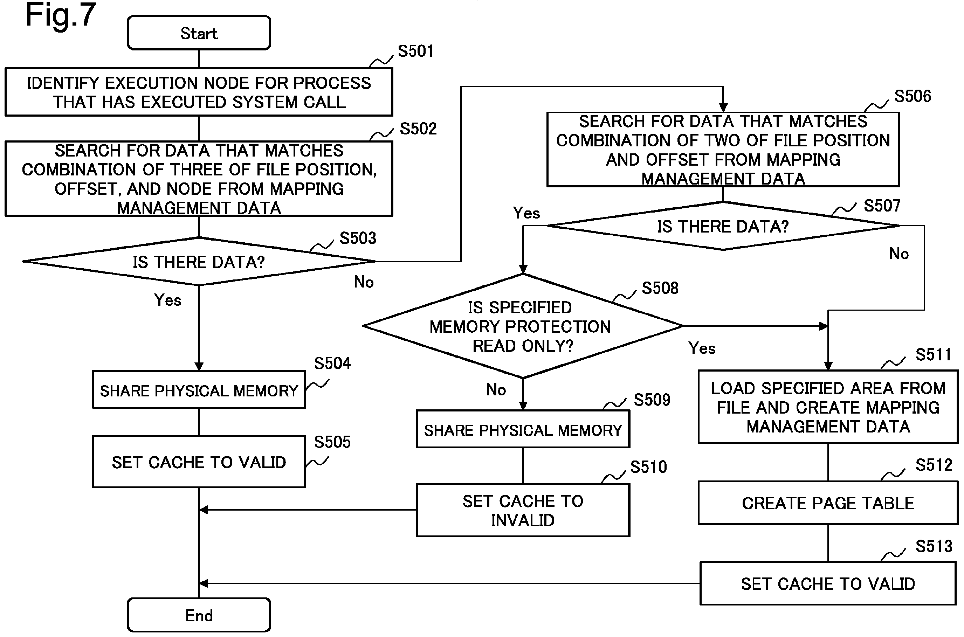

Next, processing in which the process performs file mapping will be described with reference to Figs. 6 and 7.

Fig. 6 is a flowchart illustrating operation of the file mapping by the program.

When loading a file, the process executes a system call for performing memory sharing by specifying the position, offset, and memory protection of the file (step S301). After the system call is executed, control is transferred to the OS, and the process waits for a result of the system call to be returned (step S302).

Fig. 7 is a flowchart illustrating operation of file mapping by the OS.

The loader (not illustrated) of the OS identifies an execution node for the process that has executed the system call from the process management information retention unit 110 (step S501). For example, the process management information retention unit 110 retains necessary information regarding the process being executed, and the node information is queried based on the PID of the request source to identify the execution node. The memory position determination unit 160 of the OS searches for data that matches the combination of three of a file position, an offset, and a node of the binary file from the mapping management data (step S502).

When there is data that matches the combination of three (Yes in step S503), this means that the data has been mapped to the local memory of the node in which the process operates. The mapping unit 170 of the OS creates a page table so as to share the physical memory (step S504), and sets the cache to valid (step S505).

When there is no data that matches the combination of three (No in step S503), the memory position determination unit 160 searches for data that matches a combination of two of the file position and the offset of the binary file from the mapping management data (step S506).

When there is data that matches the combination of two (Yes in step S507), this means for the process that the data has been mapped to the remote memory. When the protection of the specified memory area is read-write (not read-only) (N0 in step S508), the mapping unit 170 creates a page table, shares the physical memory thereof (step S509), and sets the cache to invalid (step S510).

When there is no data that matches the combination of two (No in step S507), this means for the process that the data has not been mapped to the memory. The mapping unit 170 loads data into the local memory and creates mapping management data (step S511). The mapping unit 170 then creates a page table (step S512) and sets the cache to valid (step S513).

In step S508, when the specified memory protection is read-only for the data mapped to the remote memory (Yes in step S508), the mapping unit 170 loads the data into the local memory, creates the mapping management data (step S511), creates the page table (step S512), and sets the cache to valid (step S513).

Although the first example embodiment has been described above, the present example embodiment is not limited to the above example. For example, the example embodiment can be modified as follows.

### (Modification example 1)

The first example embodiment described above has been described with the example of the architecture in which the cache coherency between the NUMA nodes 0, 1 is not maintained, but the present invention is not limited to this. It is also applicable to architectures where cache coherency between NUMA nodes 0, 1 is maintained.

### (Modification example 2)

The first example embodiment described above has been described with the example in which the cache for the NUMA nodes 0, 1 is invalidated when a read-write area is shared, but the present invention is not limited to this. When the read-write area is shared, the cache between the NUMA nodes 0, 1 may be validated.

### (Modification example 3)

The first example embodiment described above has been described with the example of loading the memory area from a file into the local memory when the memory area is mapped to a remote memory, but the present invention is not limited to this. For example, the memory area may be copied from the remote memory to the local memory.

### (Modification example 4)

The first example embodiment described above has been described with the example of the computer system using the NUMA architecture, but the present invention is not limited to this. For example, in an architecture including a calculation node for executing a user program without operating an OS and a control node for providing an OS function, the present invention is applicable to a case where a computer node in which the OS is not operating constitutes NUMA.

### (Modification example 5)

The computer readable storage medium may be, for example, a hard disk drive, a removable magnetic disk medium, an optical disk medium, or a memory card.

### (Effect of first example embodiment)

According to the first example embodiment, when a text area is mapped to the remote memory, the text area can be duplicated to the local memory and the text area on the local memory can be used. Deterioration of memory access performance of a process can be suppressed. Thus, for example, even when multiple processes are started, access to the text area can be made on the faster local memory.

When the text area is mapped to the remote memory, the memory protection is checked, and if the memory protection is read-only, the read-only text area can be copied to the local memory, and this text area can be used. For example, when the data area is read-only, the shared data area can be a local memory to which access is faster.

According to the first example embodiment, the cache coherency maintenance between the NUMA nodes is invalidated and the cache for accessing the remote memory of another node is invalidated, and thus the amount of data for cache coherency maintenance flowing through the interconnect can be reduced. The communication, an amount of which is a reduced amount in the interconnect, can be used for the memory transfer requested by the process. It is expected that memory transfer performance executed by the process is improved in the whole system.

### (Second example embodiment)

A memory disposition device as one mode of a second example embodiment will be described. The memory disposition device of the second example embodiment has a form in which the memory disposition device of the first example embodiment is represented by a minimum configuration. Similarly to the first example embodiment, the memory disposition device of the second example embodiment is also applied to a computer system in which a plurality of nodes exists, each of the nodes including a pair of a processor and a memory. The hardware configuration of the computer system is similar to that of Fig. 1.

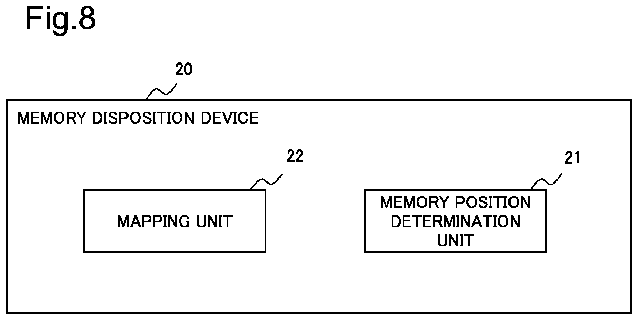

Fig. 8 is a block diagram illustrating the function of the memory disposition device according to the second example embodiment. The memory disposition device 20 illustrated in Fig. 8 includes a memory position determination unit 21 and a mapping unit 22. The memory position determination unit 21 determines a node where a memory area to be mapped is disposed. The mapping unit 22 duplicates the memory area based on the determination result of the memory position determination unit 21 and disposes the memory area in the local memory of the node in which the process operates.

The mapping unit 22 invalidates the maintenance of cache coherency between nodes and constantly invalidates the cache for accessing a remote memory. Thus, data of cache coherence protocol is prevented from flowing through the interconnect. Memory bus traffic is reduced and can be used for memory transfer that is originally desired to be performed by a process.

According to the second example embodiment, when the text area is mapped to the remote memory, the text area can be duplicated in the local memory and this text area on the local memory can be used. Deterioration of memory access performance of a process can be suppressed. Thus, for example, even when multiple processes are started, access to the text area can be made on the faster local memory.

When the text area is mapped to the remote memory, the memory protection is checked, and if the memory protection is read-only, the read-only text area can be copied to the local memory, and this text area can be used.

Although the example embodiments of the present disclosure have been described above, the present disclosure is not limited to the example embodiments described above. That is, to the example embodiments of the present disclosure, various modes that may be understood by those skilled in the art can be applied.

This application is based upon and claims the benefit of priority from Japanese patent application No. 2019-033000 filed on February 26, 2019, the disclosure of which is incorporated herein in its entirety by reference.

### [Reference signs List]

- 10: CPU
- 11: Core
- 12: Memory
- 13: Memory channel
- 14: Interconnect
- 15: Hard disk
- 100: Kernel
- 160: Memory position determination unit
- 170: Mapping unit

## Claims

1. A memory disposition device of a computer system in which a plurality of nodes exists, each of the nodes including a pair of a processor and a memory, the memory disposition device comprising:
a memory position determination means for determining a node in which a memory area to be mapped is disposed; and
a mapping means for duplicating the memory area and disposing the memory area, based on a determination result, in a local memory of a node in which a process operates,
wherein the mapping means invalidates maintenance of cache coherency between the nodes and invalidates access to a remote memory for the process.

2. The memory disposition device according to claim 1, wherein
the memory area is a read-only area referred to by the process,
the memory position determination means determines whether the read-only area is disposed in the remote memory, and
when the mapping means is disposed in the remote memory, the mapping means duplicates the read-only area and disposes the read-only area in the local memory of the node where the process is operated.

3. The memory disposition device according to claim 1 or 2, wherein the memory position determination means searches for data that matches a combination of three of a file position, an offset, and a node of a binary file from the mapping management data, and identifies a node in which the memory area is disposed.

4. The memory disposition device according to claim 3, wherein
when the data that matches the combination of three is present, the memory position determination means identifies a node in which the data that matches is present, and
the mapping means causes a physical memory to be shared in a memory area of the node in which the data that matches is present.

5. The memory disposition device according to claim 3, wherein when no data that matches the combination of three is present, the memory position determination means searches for data that matches a combination of two of the file position and the offset from the mapping management data, and identifies a node in which the memory area is disposed.

6. The memory disposition device according to claim 5, wherein when the data that matches the combination of two is present, the mapping means causes the physical memory in the memory area to be shared if the memory area of a node in which the data that matches is present is read-only.

7. The memory disposition device according to claim 5, wherein when the data that matches the combination of two is not present, the mapping means loads a memory area to be mapped from a file and disposes the memory area in the local memory.

8. A memory disposition method of a computer system in which a plurality of nodes exists, each of the nodes including a pair of a processor and a memory, the memory disposition method comprising:
determining a node in which a memory area to be mapped is disposed;
duplicating the memory area and disposing the memory area, based on a determination result, in a local memory of a node in which a process operates; and
invalidating maintenance of cache coherency between the nodes and invalidating access to a remote memory for the process.

9. A recording medium storing a memory disposition program of a computer system in which a plurality of nodes exists, each of the nodes including a pair of a processor and a memory, the memory disposition program causing the processor to execute a process comprising:
determining a node in which a memory area to be mapped is disposed;
duplicating the memory area and disposing the memory area, based on a determination result, in a local memory of a node in which a process operates; and
invalidating maintenance of cache coherency between the nodes and invalidating access to a remote memory for the process.
